# EUROPÄISCHE PATENTSCHRIFT

(11) **EP 2 062 925 B1**
(45) Veröffentlichungstag und Bekanntmachung des Hinweises auf die Patenterteilung: **29.02.2012**
(21) Anmeldenummer: 08020053.8
(22) Anmeldetag: 18.11.2008
(51) Int. Cl.: C08F 255/02, C08F 8/12, C08F 8/44, C08L 91/06

(54) **Ionomere aus Poly-1-Olefinwachsen**
Ionomers made from poly-1-olefin waxes
Ionomères constitués de cires poly-1-oléfines

(30) Priorität: 23.11.2007 DE 102007056440
(43) Veröffentlichungstag der Anmeldung: 27.05.2009
(73) Patentinhaber: Clariant Finance (BVI) Limited, Road Town, Tortola (VG)
(72) Erfinder: Hohner, Gerd, 86368 Gersthofen (DE)
(74) Vertreter: Hütter, Klaus

(56) Entgegenhaltungen:
- WO-A-99/55744
- BE-A- 742 272
- DE-A1- 19 648 895
- US-A- 3 859 386

## Beschreibung

Die vorliegende Erfindung betrifft wachsartige lonomere ("Ionomerwachse") mit niedriger Schmelzviskosität, basierend auf Umsetzungsprodukten von Poly-1-Olefinwachsen mit α, β-ungesättigten Carbonsäuren oder deren Derivaten.

Ionomere basierend auf funktionalisierten, z. B. Carboxylgruppen enthaltenden Polyethylen-Strukturen sind bekannt. Zu ihrer Herstellung wird z. B. Säuregruppen enthaltendes Polyethylen, gewonnen durch Copolymerisation von Ethylen und α, β-ungesättigten Carbonsäuren, im Sinne einer Neutralisation oder Verseifung mit Metalloxiden oder -hydroxiden umgesetzt.

Ionomere auf Polyolefinbasis finden Verwendung z. B. als Additive für Kunststoffe, etwa als Nukleierungsmittel zur Beeinflussung des Kristallisationsverhaltens und der Morphologie, als (permanent wirksame oder migrierende) Antistatika sowie als Verarbeitungshilfsmittel bei der Formgebung. Sie werden weiterhin als Pigmentdispergiermittel bei der Einfärbung von Kunststoffen mit organischen oder anorganischen Pigmenten eingesetzt. Aus Polyolefin-lonomeren können ferner Folien für Verpackungen und Beschichtungen hergestellt werden.

In US 3 264 272 werden lonomere beschrieben, die durch partielle Verseifung von hochmolekularen, kunststoffartigen Copolymeren Olefinen und Acrylsäure oder Methacrylsäure zugänglich sind. Beim Verseifungsprozess wird ein drastischer Viskositätsanstieg beobachtet, erkennbar an der Abnahme des Schmelzindex-Wertes.

Aus EP 0 054 761 ist die Umsetzung von wachsartigen Ethylen-Acrylsäure-Copolymeren mit Metalloxiden oder -hydroxiden bekannt. Die Viskositäten der in den Ausführungsbeispielen eingesetzten Rohstoffe liegen bei 500 bzw. 650 mPa·s bei 140 °C, bei der Verseifung steigen die Viskositätswerte mit zunehmendem Verseifungsgrad auf ein Vielfaches an. Für Verseifungsgrade von mehr als 50 % werden keine Viskositätswerte mehr angegeben.

In EP 0 104 316 wird die Herstellung von lonomeren durch Umsetzung von niedermolekularen Copolymeren aus Ethylen und α, β-ungesättigten Carbonsäuren mit Oxiden der Gruppe IIA des Periodensystems beschrieben.

Niedermolekulare wachsartige lonomere basierend auf Polymeren von 1-Olefinen mit mehr als 2 C-Atomen sind bisher nicht bekannt geworden.

Die US 3,895,386 beschreibt ein emulgierbares, säurefunktionalisiertes Polypropylenwachs, das durch Pfropfung von Propylenwachs mit Crotonsäure in Gegenwart von Peroxid als Katalysator hergestellt wird. Sie beschreibt auch die Zubereitung wässriger Emulsionen aus den gepfropften Wachsen, die zusammen mit Wasser, Emulgator und KOH vermischt und anschließend im Reaktor auf 180 °C erhitzt werden. Die Isolierung von Ionomerwachsen ist aber nicht beschrieben, auch nicht deren Eigenschaften, sondern es wird nur angegeben, dass die Emulsion als Überzug auf schwarzes Glas aufgebracht wird und dort einen transparenten Film bildet, der einen exzellenten Glanz besitzt.

Die WO 99/55744 beschreibt die Pfropfung von Polypropylenwachs mit Maleinsäureanhydrid unter Stickstoff als Schutzgas sowie die Bestimmung der Säurezahl an diesen gepfropften Produkten. Hierzu wird eine Lösung des gepfropften Wachses hergestellt und die wird dann bis zur vollständigen Neutralisation der freien Säuregruppen mit KOH versetzt. Die Schrift beschreibt auch, wie aus den gepfropften Wachsen wässrige Emulsionen hergestellt werden können, wobei Wasser, KOH und Emulgatoren zugegeben werden. Im Rahmen der Ausführungsbeispiele wird u. a. zwar die Größe von emulgierten Polymerteilchen in Emulsion angegeben, aber Pulver aus isoliertem Inonomerwachs, das einen d₅₀-Wert von kleiner als 8 µm hat, ist in der WO nicht angegeben.

Die BE 742 272 beschreibt ebenfalls die Pfropfung von Polypropylen mit niedriger Viskosität mit Acrylsäure in einem Extruder, nicht aber die Herstellung von Ionomerwachs, das daraus durch Umsetzung mit KOH hergestellt wird. Ionomerwachse können prinzipiell in einfacher Weise im Rührkesselverfahren durch Einrühren geeigneter Metallverbindungen in die Schmelze von funktionalisierten Wachsen hergestellt werden. Diese Verfahrensweise setzt voraus, dass die Viskosität während der Umsetzung ausreichend niedrig bleibt, um eine wirksame Durchmischung der Reaktionskomponenten zu gewährleisten bzw. eine Überlastung des Rührorgans zu vermeiden. Dieser Aspekt ist insbesondere dann von Bedeutung, wenn es zur Erzielung einer optimalen anwendungsstechnischen Effizienz der lonomeren erforderlich ist, hohe Neutralisations- oder Verseifungsgrade, z. B. solche nahe 100 % einzustellen. Die bisher bekannten auf funktionalisierten Polyethylenwachsen basierenden lonomere weisen bei höheren Verseifungsgraden extrem hohe Schmelzviskositäten auf oder sind nicht schmelzbar. Ihre technische Herstellung erfordert daher spezielle aufwendige Arbeitsweisen. Letzteres gilt gleichermaßen auch für ihre Anwendung, soweit diese über den schmelzflüssigen Zustand erfolgt.

Es wurde nun gefunden, dass lonomerwachse mit niedriger Schmelzviskosität durch Verseifung von Poly-1-Olefinwachsen zugänglich sind, die durch radikalische Pfropfung mit α, β-ungesättigten Carbonsäuren funktionalisiert wurden. Insbesondere wird dabei unerwarteterweise auch bei vollständiger Verseifung bis zum maximalen Metallgehalt ein allenfalls nur mäßiger Anstieg der Schmelzviskosität beobachtet.

Gegenstand der Erfindung sind lonomerwachse mit einer Schmelzviskosität gemessen bei 170 °C von kleiner als 5000 mPa·s und einem Tropf- oder Erweichungspunkt im Bereich von 70 bis 165 °C, enthaltend mit α-, β-ungesättigten Carbonsäuren oder deren Derivaten durch radikalische Pfropfung funktionalisierte und anschließend verseifte Poly-1-Olefine, deren kennzeichnendes Merkmal darin zu sehen ist, dass mindestens 30 % der im funktionalisierten Wachs enthaltenen funktionellen Gruppen verseift sind. Die Ionomerwachse werden aus funktionalisierten Wachsen durch deren Umsetzung mit Metallverbindungen hergestellt, wobei die funktionalisierten Wachse durch radikalische Pfropfung von nicht funktionalisierten Poly-1-Olefinwachsen mit α, β-ungesättigten Carbonsäuren oder deren Derivaten gewonnen wurden.

Carboxylgruppen enthaltende Poly-1-Olefinwachse sind durch Pfropfung von ungesättigten Säuren auf 1-Olefin-Polymere zugänglich. In EP 0 941 257 ist beispielsweise die Umsetzung von Polypropylenwachsen mit Acrylsäure in Gegenwart von Di-tert.-butylperoxid als Radikallieferant beschrieben.

Unter den als Propfgrundlage verwendeten Poly-1-Olefin-Wachsen werden in Abgrenzung zu kunststoffartigen Poly-1-Olefinen Materialien mit niedrigen mittleren Polymerisationsgraden oder Kettenlängen verstanden. Diese bedingen wiederum niedrigere Schmelzviskositäten, die im Fall der Wachse, gemessen bei 170 °C, typischerweise im Bereich von kleiner als 5.000 mPa·s, im Fall der Poly-1-Olefin-Kunststoffe dagegen in der Regel oberhalb 1.000 Pa·s liegen.

Poly-1-Olefin-Wachse können durch thermischen Abbau von Poly-1-Olefin-Kunststoffen oder im Aufbauprozess durch direkte Polymerisation von 1-Olefinen hergestellt werden. Als Polymerisationsverfahren kommen katalytische Verfahren unter Einsatz metallorganischer Katalysatoren, beispielsweise Ziegler- oder Metallocenkatalysatoren in Frage. Entsprechende Methoden zur Herstellung von Homo- und Copolymerwachsen sind beispielsweise in Ullmann's Encyclopedia of Industrial Chemistry, 5. Aufl., Vol. A 28, Weinheim 1996 in Kapitel 6.1.2. (Ziegler-Natta-Polymerisation, Polymerisation mit Metallocenkatalysatoren) sowie Kap. 6.1.4. (thermischer Abbau) beschrieben. Die Herstellung von Polyolefinwachsen mit Hilfe von Metallocenkatalysatoren beschreibt im Speziellen z. B. auch die Patentschrift EP 0 571 882.

Als Poly-1-Olefin-Wachse sind sowohl Homopolymere aus 1-Olefinen R-CH=CH2 als auch deren Copolymere untereinander oder mit Ethylen geeignet. Darin bedeutet R einen geradkettigen oder verzweigten Alkylrest mit 1 bis 20 C-Atomen. Copolymerwachse können 1-Olefine in beliebigen Mengenverhältnissen enthalten; im Falle von Copolymerwachsen aus 1-Olefinen und Ethylen kann der Ethylengehalt zwischen 0,1 und 49 Gew.-% liegen.

Bevorzugt als Ausgangsmaterialien für die Pfropfung sind durch direkte Polymerisation erhaltene Poly-1-Olefinwachse, besonders bevorzugt solche, die mit Hilfe von Ziegler- oder Metallocenkatalysatoren hergestellt wurden. Besonders bevorzugt sind dabei Polypropylenwachse, insbesondere Propylenhomopolymerwachse oder Copolymerwachse aus Propylen und Ethylen. Die Poly-1-Olefinwachse können sowohl isotaktische, syndiotaktische als auch ataktische Strukturelemente enthalten. Die Copolymerwachse können statistisch oder blockartig aufgebaut sein.

Als Pfropfmonomere kommen sowohl ein- als auch mehrbasige α, β-ungesättigte Carbonsäuren in Frage. Geeignete einbasige Säuren sind beispielsweise Acrylsäure, Methacrylsäure, Ethacrylsäure oder Crotonsäure. Beispiele für mehrbasige Säuren sind Maleinsäure oder Fumarsäure. Die Säuren können sowohl einzeln als auch zu mehreren in Mischung eingesetzt werden. Neben den freien Säuren können auch ihre Derivate verwendet werden, soweit sich die resultierenden Pfropfprodukte in der Folge zu lonomeren umsetzen lassen. Zu derartigen Derivaten zählen z. B. Ester, beispielsweise Ester der Acrylsäure wie Methylacrylat oder Anhydride, beispielsweise Maleinsäureanhydrid. Bevorzugte Pfropfkomponenten sind die Acryl- und die Methacrylsäure, besonders bevorzugt ist die Acrylsäure.

Die α, β-ungesättigte Carbonsäuren werden für die Pfropfreaktion in Mengen von 0,1 bis 60 Gew.-%, bezogen auf eingesetztes nicht funktionalisiertes Wachs, verwendet. Die Pfropfung wird in der Regel mit Hilfe eines Radikalstarters initiiert, bevorzugt einer organischen Peroxoverbindung, z. B. einem Alkylhydroperoxid, einem Dialkyl- oder Diarylperoxid oder einem Peroxoester. Die Pfropfreaktion kann in Lösung oder in der Schmelze bei Temperaturen durchgeführt werden, die der Zerfallscharakteristik des Peroxids angepasst ist. Bevorzugt ist die Umsetzung in der Schmelze.

Die Herstellung der Poly-1-Olefin-lonomeren erfolgt grundsätzlich in der Weise, dass das durch Pfropfung mit α, β-ungesättigten Carbonsäuren oder deren Derivaten erhaltene Poly-1-Olefinwachs im schmelzflüssigen Zustand oder in Lösung, bevorzugt in der Schmelze, mit einer Metallverbindung behandelt wird, die die im Wachs vorhandenen Säure- bzw. säureäquivalenten Funktionen partiell oder vollständig zu Carboxylatfunktionen umsetzt. Die verwendeten Metallverbindungen enthalten Metalle bevorzugt der Gruppen IA, IIA, IIIA, IB, IIB und VIIIB des Periodischen Systems, besonders bevorzugt Alkali- und Erdalkalimetalle sowie Zink. Als Metallverbindungen kommen allgemein solche in Frage, die sich mit Säure- oder säureäquivalenten Funktionen zu Metallcarboxylaten umsetzen lassen, z. B. Hydroxide oder Oxide. Es können auch Metallverbindungen mit Salzcharakter eingesetzt werden, insbesondere Salze von flüchtigen Säuren. Bevorzugt sind jedoch Hydroxide und/oder Oxide. Als Beispiele für Metallverbindungen seien genannt Natrium- oder Kaliumhydroxid, Calcium- und Magnesiumoxid oder -hydroxyd, Aluminiumhydroxid, ferner Zinkoxid oder -hydroxid. In einem bevorzugten Herstellverfahren wird die Schmelze des Säurewachses vorgelegt und die Metallverbindung als solche oder in Wasser gelöst oder dispergiert unter Rühren in die Wachsschmelze eingetragen. Zugesetztes Wasser sowie gegebenenfalls entstehendes Reaktionswasser kann während der Umsetzung oder im Anschluss daran durch Destillation bei Normal- oder Unterdruck und/oder durch einen Gasstrom, bevorzugt einen Inertgasstrom, entfernt werden. Die Umsetzung kann grundsätzlich diskontinuierlich oder kontinuierlich erfolgen.

Das Mengenverhältnis aus eingesetzter Metallverbindung und eingesetztem funktionalisiertem Poly-1-Olefinwachs wird so gewählt, dass ein Verseifungsgrad von mindestens 30 %, bevorzugt mindestens 50%, besonders bevorzugt mindestens 70 % erreicht wird. Ganz besonders bevorzugt sind Verseifungsgrade zwischen 80 und 100 %. Der Verseifungsgrad gibt an, welcher prozentuale stöchiometrische Anteil der ursprünglich vorhandenen Säure- oder säureäquivalenten Gruppen zu Carboxylat umgesetzt wurde.

Das Ausmaß der Carboxylatbildung kann beispielsweise durch Bestimmung der Säurezahl oder durch IR-Spektroskopie während der Reaktion verfolgt bzw. am Endprodukt überprüft werden.

Die erfindungsgemäßen lonomerwachse weisen Schmelzviskositäten, gemessen bei 170 °C, von kleiner als 5.000, bevorzugt kleiner als 1.000 mPa·s auf. Ihre Tropfpunkte liegen zwischen 70 und 165 °C, bevorzugt zwischen 90 und 160 °C.

Die lonomerwachse können durch Versprühung oder Vermahlung zu Pulvern verarbeitet und auch in dieser Form eingesetzt werden, wenn dies anwendungstechnisch erforderlich oder vorteilhaft ist. Für die Vermahlung sind neben mechanischen beispielsweise auch Strahlmühlen geeignet. Bei ausreichender Sprödigkeit können extrem kleine Partikelgrößen, beispielsweise d50-Werte von < 8 µm erreicht werden. Der d50-Wert sagt dabei aus, dass 50 % der Teilchen eine Größe unterhalb des jeweiligen Wertes aufweisen. Die lonomerwachse können auch in beliebig gröberer Form, beispielsweise als Granulat verwendet werden.

Die lonomerwachse lassen sich z. B. als Pigmentdispergiermittel bei der Einfärbung von thermoplastischen Kunststoffen mit organischen oder anorganischen Pigmenten, als Nukleierungsmittel zur Beeinflussung des Kristallisationsverhaltens und der Morphologie von thermoplastischen Kunststoffen sowie als (permanent wirksame oder migrierende) antistatisch wirksame Additive einsetzen. Sie eignen sich als Gleit- und Trennmittel für die Kunststoffverarbeitung und können zu wässrigen oder lösemittelhaltigen Dispersionen für Pflege- oder technische Anwendungen verarbeitet werden. Sie sind weiterhin als Mattierungs- und Scheuerschutzadditive für Lacke und zur Optimierung der mechanischen Stabilität und der Slipeigenschaften von Druckfarbenfilmen verwendbar.

### Beispiele:

Die Erfindung wird anhand der folgenden Ausführungsbeispiele näher erläutert.

Die Schmelzviskositäten wurden nach DIN 51562 mit einem Rotationsviskosimeter, die Tropfpunkte nach DIN 51801/2 und die Säurezahlen nach DIN 53402 bestimmt. IR-spektroskopische Messungen wurden unter Verwendung des Gerätes Vector 22 (Bruker) durchgeführt.

### Beispiele 1-6

### Herstellung der mit α, β-ungesättigten Säuren gepfropften Wachse ("Wachssäuren")

Jeweils 2.500 g der in Tabelle 1, Spalte 2 aufgeführten nicht funktionellen Wachse wurden in einer mit Rührwerk, Innenthermometer und Destillationsbrücke ausgestatteten Glasapparatur unter Stickstoffüberlagerung aufgeschmolzen. Bei einer Temperatur von 150 °C wurden unter Rühren im Laufe von 3 h aus einem Dosiertrichter kontinuierlich die in Spalte 3 aufgeführte α, β-ungesättigte Säure zudosiert, gleichzeitig erfolgte aus einem zweiten Tropftrichter die kontinuierliche Zugabe von 25,0 g Di-tert.-butylperoxid. Nach Ende der Dosierung wurde die Temperatur auf 160 °C erhöht und man ließ 1 h nachreagieren. Anschließend wurde Vakuum (ca. 30 mbar) angelegt und die flüchtigen Anteile wurden abdestilliert. Nach ca. 30 min wurde durch Einleiten von Stickstoff auf Normaldruck entspannt. Schmelzviskosität und Säurezahl der resultierenden Wachssäuren sind in den Spalten 5 und 6 aufgelistet.

Als Ausgangsmaterialien wurden folgende Wachse eingesetzt:
Licocene^{®} PP 6102, Licocene^{®} PP 4202: Polypropylenwachse, hergestellt mit Metallocenkatalysatoren, Handelsprodukte der Fa. Clariant Produkte (Deutschland) GmbH;
Viscol 550-P: Propylen-Ethylen-Copolymerwachs, Handelsprodukt der Fa. Sanyo Chemical Industries.

### Umsetzung der Wachssäuren zu lonomerwachsen

Jeweils 2.500 g der durch Pfropfung erhaltenen funktionalisierten Wachse wurden in einer mit Rührwerk, Innenthermometer und Destillationsbrücke ausgestatteten Glasapparatur unter Stickstoffüberlagerung aufgeschmolzen. Bei einer Temperatur von 160-170 °C wurde unter wirksamem Rühren innerhalb von ca. 15 min portionsweise das in nachfolgender Tabelle, Spalte 7 genannte Alkali- oder Erdalkalihydroxid in pulverförmiger Form in dem in Spalte 8 angegebenen Äquivalentverhältnis eingetragen. Es wurde noch 30 min bei 160-170 °C gerührt. Anschließend wurde zur Trocknung Vakuum angelegt, bis die Schmelze blasenfrei war. Die Eigenschaften der resultierenden lonomerwachse sind ebenfalls in nachfolgender Tabelle aufgelistet.

| 1 | 2 | 3 | 4 | 5 | 6 | 7 | 8 | 9 | 10 | 11 |
|---|---|---|---|---|---|---|---|---|---|---|
| Bsp. | Herstellung / Eigenschaften der Wachssäure | | | | | Herstellung des Ionomerwachses | | Eigenschaften des Ionomerwachses | | |
| | Wachsrohstoff | Säurekomponente | Einsatzmenge Säurekomponente (Gew.-%, bez.auf eingesetzten Wachsrohstoff) | Viskosität/ 170°C (mPa·s) | Säurezahl (mg KOH/g) | Base | Äquivalent-verhältnis Base: Wachssäure | Viskosität/ 170°C (mPa·s) | Säurezahl (mg KOH/g) | Tropfpunkt (°C) |
| 1 | Licocene^{®} PP 6102 | Acrylsäure | 10 | 97 | 68 | KOH | 0,95 | 119 | 5 | 142 |
| 1 | Licocene^{®} PP 6102 | Acrylsäure | 20 | 110 | 125 | KOH | 0,95 | 196 | 7 | 143 |
| 2 | Licocene^{®} PP 4202 | Acrylsäure | 10 | 113 | 69 | KOH | 0,95 | 119 | 6 | 121 |
| 3 | Licocene^{®} PP 6102 | Acrylsäure | 10 | 97 | 68 | NaOH | 1,00 | 127 | 8 | 141 |
| 4 | Licocene^{®} PP 6102 | Acrylsäure | 10 | 97 | 68 | Ca(OH)2 | 0,95 | 146 | 9 | 143 |
| 5 | Licocene^{®} PP 6102 | Methacrylsäure | 10 | 107 | 55 | KOH | 0,95 | 135 | 5 | 142 |
| 6 | Viscol 550-P | Acrylsäure | 10 | 891 | 67 | KOH | 0,95 | 1601 | 5 | 152 |

Die hergestellten lonomerwachse weisen entsprechend ihrem hohen Verseifungsgrad niedrige Säurezahlen unterhalb von 10 mg KOH/g auf. In den IR-Spektren sind keine oder nur geringe Absorptionssignale im Bereich der Säurecarbonylgruppe (ca. 1.700-1.710 cm-1), jedoch intensive Carboxylatbanden im Bereich 1.610-1.550 bzw. 1.420-1.300 cm-1 erkennbar.

## Patentansprüche

1. lonomerwachse mit einer Schmelzviskosität gemessen bei 170 °C von kleiner als 5000 mPa·s und einem Tropf- oder Erweichungspunkt im Bereich von 70 bis 165 °C, enthaltend mit alpha, beta-ungesättigten Carbonsäuren oder deren Derivaten durch radikalische Pfropfung funktionalisierte und anschließend verseifte Poly-1-Olefine, **dadurch gekennzeichnet, dass** mindestens 30 % der im funktionalisierten Wachs enthaltenen funktionellen Gruppen verseift sind.

2. Verfahren zur Herstellung von lonomerwachsen nach Anspruch 1 durch Umsetzung von funktionalisierten Poly-1-Olefinwachsen mit Metalloxid- und/oder -hydroxidverbindungen, wobei als Metalle Alkali-, Erdalkalimetalle, Zink oder Aluminium verwendet werden.

3. Verfahren nach Anspruch 2, **dadurch gekennzeichnet, dass** die nicht funktionalisierten Polymerwachse durch Polymerisation mit Hilfe von Ziegler- oder Metallocenkatalysatoren hergestellt wurden.

4. Verfahren nach Anspruch 2 oder 3, **dadurch gekennzeichnet, dass** die nicht funktionalisierten Poly-1-Olefinwachse Homopolymere von 1-Olefinen der Formel R-CH=CH₂ oder Copoplymere solcher 1-Olefine untereinander oder mit Ethylen sind, worin R einen geradkettigen oder verzeigten Alkylrest mit 1 bis 20 C-Atomen bedeutet, und der Ethylengehalt im Bereich von 0,1 bis 49 Gew.-% liegt.

5. Verwendung eines lonomerwachses nach Anspruch 1 als Pigmentdispergiermittel, als Nukleierungsmittel, als Gleit- oder Trennmittel in der Kunststoffverarbeitung, als Mattierungs- oder Scheuerschutzadditiv für Lacke oder als Additiv bei der Herstellung von Druckfarbenfilmen.

6. Verwendung nach Anspruch 5, **dadurch gekennzeichnet, dass** das Ionomerwachs als Pulver mit d₅₀-Werten von kleiner als 8 µm verwendet wird.

## Claims

1. An ionomer wax having a melt viscosity as measured at 170°C of less than 5000 mPa·s and a dropping or softening point in the range from 70 to 165°C, comprising poly-1-olefins which have been functionalized by free-radical grafting with alpha, beta-unsaturated carboxylic acids or their derivatives and then hydrolyzed, wherein at least 30% of the functional groups present in the functionalized wax are hydrolyzed.

2. A process for preparing an ionomer wax as claimed in claim 1 by reaction of functionalized poly-1-olefin waxes with metal oxide or metal hydroxide compounds, alkali metals, alkaline earth metals, zinc or aluminum being used as metals.

3. The process as claimed in claim 2, wherein the nonfunctionalized polymer waxes have been prepared by polymerizing using Ziegler catalysts or metallocene catalysts.

4. The process as claimed in claim 2 or 3, wherein the nonfunctionalized poly-1-olefin waxes are homopolymers of 1-olefins of the formula R-CH=CH₂ or copolymers of such 1-olefins with one another or with ethylene, in which R is a straight-chain or branched alkyl radical having 1 to 20 carbon atoms and the ethylene content is in the range from 0.1% to 49% by weight.

5. The use of an ionomer wax as claimed in claim 1 as a pigment dispersant, as a nucleator, as a lubricant or release agent in plastics processing, as a matting additive or abrasion protection additive for coating materials, or as an additive in the production of printing-ink films.

6. The use as claimed in claim 5, wherein the ionomer wax is used as a powder having d₅₀ values of less than 8 µm.

## Revendications

1. Cires ionomères ayant une viscosité à l'état fondu, mesurée à 170 °C, inférieure à 5 000 mPa·s et un point de goutte ou de ramollissement dans la plage allant de 70 à 165 °C, contenant des poly-1-oléfines fonctionnalisées avec des acides carboxyliques alpha, bêta-insaturés ou leurs dérivés par greffage radicalaire, puis saponifiées, **caractérisées en ce qu'**au moins 30 % des groupes fonctionnels contenus dans la cire fonctionnalisée sont saponifiés.

2. Procédé de fabrication de cires ionomères selon la revendication 1 par mise en réaction de cires de poly-1-oléfine fonctionnalisées avec des composés d'oxydes et/ou d'hydroxydes de métaux, des métaux alcalins, alcalino-terreux, le zinc ou l'aluminium étant utilisés en tant que métaux.

3. Procédé selon la revendication 2, **caractérisé en ce que** les cires polymères non fonctionnalisées ont été fabriquées par polymérisation à l'aide de catalyseurs de Ziegler ou métallocènes.

4. Procédé selon la revendication 2 ou 3, **caractérisé en ce que** les cires de poly-1-oléfine non fonctionnalisées sont des homopolymères de 1-oléfines de formule R-CH=CH₂ ou des copolymères de telles 1-oléfines les unes avec les autres ou avec de l'éthylène, R signifiant un radical alkyle linéaire ou ramifié de 1 à 20 atomes C et la teneur en éthylène étant dans la plage allant de 0,1 à 49 % en poids.

5. Utilisation d'une cire ionomère selon la revendication 1 en tant qu'agent de dispersion de pigments, en tant qu'agent de nucléation, en tant qu'agent lubrifiant ou démoulant dans l'usinage de plastiques, en tant qu'additif matant ou anti-abrasif pour laques ou en tant qu'additif lors de la fabrication de films d'encres d'impression.

6. Utilisation selon la revendication 5, **caractérisée en ce que** la cire ionomère est utilisée sous la forme d'une poudre ayant des valeurs d₅₀ inférieures à 8 µm.
